# EUROPEAN PATENT SPECIFICATION

(11) **EP 2 671 692 B1**
(45) Date of publication and mention of the grant of the patent: **12.08.2015**
(21) Application number: 13002210.6
(22) Date of filing: 26.04.2013
(51) Int. Cl.: B25J 15/00, B25J 15/06, B65G 47/91

(54) **Device and method for gripping, transferring and actively releasing objects**
Vorrichtung und Verfahren zum Greifen, Überführen und zur aktiven Freigabe von Objekten
Dispositif et procédé pour saisir, transférer et libérer activement des objets

(30) Priority: 09.05.2012 SI 201200142
(43) Date of publication of application: 11.12.2013
(73) Proprietor: Univerza v Mariboru, Fakulteta za elektrotehniko, racunalnistvo in informatiko, 2000 Maribor (SI)
(72) Inventor: Safaric, Riko, 2000 Maribor (SI); Lukman, David, 2277 Sredisce ob Dravi (SI)
(74) Representative: Golmajer Zima, Marjanca

(56) References cited:
- EP-A1- 0 706 862
- EP-A1- 1 043 114

## Description

### Technical Field

The invention relates to a device with a one-finger gripper for gripping, transferring and actively releasing micro and nano objects, i. e. objects of sizes of an order of magnitude of a micrometre and nanometre, and to a method for gripping, transferring and actively releasing micro and nano objects.

### Prior Art

Grippers of various constructions are known in prior art. Optical tweezers are most often used for gripping, transferring and releasing small objects. Such optical tweezers are disclosed in document DE102010023099. Optical tweezers are used for transferring tiny biological materials, also individual cells.

Dielectrophoresis presented in US2011309323 allows movement of nano objects to certain places, yet only in a liquid.

A silicon pick-up element disclosed in CN101327592 uses piezoelectric actuators for the functioning of a two-finger silicon pick-up element.

A vacuum gripper is disclosed in DE19840387; however, this gripper is suited for work with objects exceeding several µm.

The most relevant prior art known to the applicant is disclosed in patent EP 1043114. The gripper disclosed in the patent belongs to the category of ice grippers.

A tip of a gripper is moved to a close proximity of an object to be transferred. The temperature of the gripper made from a heat conductive material is decreased below the water freezing point in atmospheric pressure conditions. Air humidity freezes on the tip of gripper. The tip of the gripper can also be sprayed with water in a liquid state. Sprayed water rapidly freezes on the tip of the gripper, wherein also an object to be transferred freezes to the tip of the gripper. After the object has been transferred, the tip of the gripper is heated to a temperature above the water freezing point, the ice melts, and the object separates from the tip of the gripper due to its gravitational force and falls onto a depositing surface. A drawback of the solution from the mentioned patent is that an object must be large enough to have gravitational force larger than van der Waals force, or the object does not separate from the tip of the gripper. Presence of water drops on the gripper after the ice had melted makes separation of the object from the gripper difficult due to the surface tension of water drops.

Van der Waals force compared to gravitational force in large objects is negligible. When object dimensions get smaller, the ratio between the mentioned forces changes to the advantage of the van der Waals force. The size of an object, at which the mentioned forces get equal, depends on many different parameters, among others material density of an object; it is estimated that the forces get equal within the range of an object size from 50 to 60 µm. In objects smaller than 60 µm, preferably smaller than 50 µm, the gravitational force of the object is smaller than van der Waals force, therefore known devices and methods fail to provide for an active release of objects.

### Technical Problem

The technical problem is how to provide a device with a gripper for objects that will allow gripping, transferring and actively releasing objects smaller than 60 µm, preferably smaller than 50 µm.

### Solution to the Technical Problem

The device of the invention is designed for gripping, transferring and actively releasing micro and nano objects, i. e. objects of the order of magnitude of a micrometre and nanometre made from various solid materials (e. g. magnetic, dielectric, electrically charged, metallic, non-metallic, conductive, insulating, semiconductive etc.), especially of objects having dimensions of several 100 nm to 60 µm. An active release means that an object can be released to a precisely defined place.

The device and the method of the invention solve the problem of efficient grippinig, transferring and actively releassing micro and nano objects, in which the gravitational force of an object is negligible in comparison with the van der Waals force between a surface and the object, and the van der Waals force between a gripper and the object. The device and the method of the invention make sure that during gripping of an object the van der Waals force between the gripper and the object and the mechanical coupling force between the gripper and the object exceed the van der Waals force between the surface and the object owing to at least partial ice coating around the object to be gripped; they also make sure that during active release the van der Waals force between the gripper and the object is smaller than the van der Waals force between the surface and the object. The manner, in which this effect is achievable, is described with the construction of the device and with the method for gripping, transferring and actively releasing objects.

The solution to the technical problem is provided by the device of the present invention comprising:
- a vacuum chamber, preferably of stainless sheet metal in the form of a cylinder, with a connector for an air suctioning line provided with a vacuum pump that generates a pressure lower than about 610 Pa, with a connector for a water vapour supply line, and with a manometer for measuring pressure within the vacuum chamber,
- a manipulation device with an arm arranged within the vacuum chamber and the repeatability of which is selected in a way to exceed approximately ½ of the diameter of the object, preferably exceeding approximately ⅓ of the diameter of the object to be transferred,
- a one-finger gripper made from a stainless, heat conductive material comprising a shaft connected with one end with the arm of the manipulation device, and a tip arranged on the distal end of the shaft and having a surface for a contact with the object to be transferred, the apex diameter) being selected in a way to be from about ⅓ to about ½ of the diameter of the object to be transferred,
- at least one cooling/heating body, preferably a Peltier element, for cooling/ heating the one-finger gripper, wherein the cooling/heating body is arranged within/on the arm of the manipulation device and connected with the one-finger gripper in a way that the top of the tip of the one-finger gripper projects over the edge of the cooling/heating body for less than 500 µm,
- a table supporting the object to be transferred,
- at least one cooling/heating body, preferably a Peltier element, for cooling/heating the table, wherein the cooling/heating body is arranged below/within the table
- a control unit for controlling the manipulation device with the arm; the cooling/heating bodies; water vapour supply; and pressure within the vacuum chamber.

The method for gripping, transferring and actively releasing micro and nano objects by means of the device of the invention comprises the following steps:
a) suctioning the gas from the vacuum chamber in order to reach a pressure smaller than 1/10 of the operating pressure within the chamber,
b) supply of water vapour into the vacuum chamber to reach an operating pressure that is lower than the pressure of the triple point of water, i. e. lower than about 610 Pa,
c) bringing the tip of the one-finger gripper to close proximity of the object to be transferred,
d) cooling the tip of the one-finger gripper and cooling the table to a temperature that lies in the diagram of the triple point of water close to the sublimation/deposition line (sometimes also called desublimation) at operating pressure, preferably slightly to the right of said line,
e) cooling the tip of the one-finger gripper to a temperature that lies in the diagram of the triple point of water left from the sublimation/deposition line at operating pressure, wherein water vapour is deposited in an ice layer that at least partly covers the object to be transferred from the top side, and on the tip of the one-finger gripper,
f) transferring the object to a desired position in close proximity of the depositing surface,
g) heating the tip of the one-finger gripper and heating of the table to a temperature that lies in the diagram of the triple point of water to the right of the sublimation/deposition line at operating pressure, wherein a layer of ice is sublimated to water vapour,
h) removing the empty tip of the one-finger gripper from the depositing surface.

The method for gripping, transferring and actively releasing micro and nano objects by means of the device of the invention can comprise further steps that increase the efficiency of object transfers:
i) cooling the table to a temperature that lies in the diagram of the triple point of water to the left of the sublimation/deposition line at operating pressure, wherein water vapour deposits in an ice layer that at least partly covers the object to be transferred from the lower side, wherein step i) is performed simultaneously with step e),
j) heating the table to a temperature that lies in the diagram of the triple point of water to the right of the sublimation/deposition line at operating pressure, wherein an ice layer sublimates to water vapour on the lower side of the object and simultaneously the layer of ice rapidly increases on the upper side of the object and on the tip of the one-finger gripper, wherein step j) is carried out after step e) and before step f).

Gas suctioning from the vacuum chamber in step a) and water vapour supply to the vacuum chamber in step b) provide the content of water vapour in the vacuum chamber higher than 90 %. A sequence of steps a) and b) can optionally be repeated at least once, with which higher concentration of water vapour in the vacuum chamber is achieved. Higher concentration of water vapour in the vacuum chamber can also be achieved by a partial overlapping of steps a) and b) in a way that step b) is started before step a) is completed. Herewith, a higher content of water vapour in the vacuum chamber is achieved and simultaneously also the content of dust particles is reduced, namely dust particles can have a size exceeding that of the object to be transferred for several times and can present an obstacle during an object transfer.

An advantage of the device of the invention over known devices provided with an ice gripper for transferring small objects lies in that it allows a transfer of objects smaller than 60 µm due to a variable geometry of the tip of the gripper, mechanical coupling between the ice and the object to be transferred, and absence of the liquid phase after the ice has melted. When an object is gripped, the geometry of the tip increases due to ice deposition, this subsequently increases the van der Waals force between the tip of the one-finger gripper and the object to be transferred, and simultaneously the ice at least partly covers the object, what leads to a mechanical coupling between the ice and the object. The increased van der Waals force between the tip of the one-finger gripper and the object to be transferred, and mechanical coupling between the ice and the object make it possible that the object can be separated from the depositing surface. On the other hand, when the object is released, the ice sublimates, the mechanical coupling between the ice and the object is released, which reduces the geometry of the apex diameter of the tip whose diameter is smaller than the diameter of the object, so the van der Waals force between the tip of the one-finger gripper and the object is smaller than the van der Waals force between the object and the depositing surface, which allows the tip of the one-finger gripper to separate from the object. A further advantage of the device of the invention is the use of cooled/heated table; the method of transfer of an object is more rapid and more efficient, since in the heating step of the table the ice is rapidly deposited on the tip of the one-finger gripper due to ice sublimation on the table.

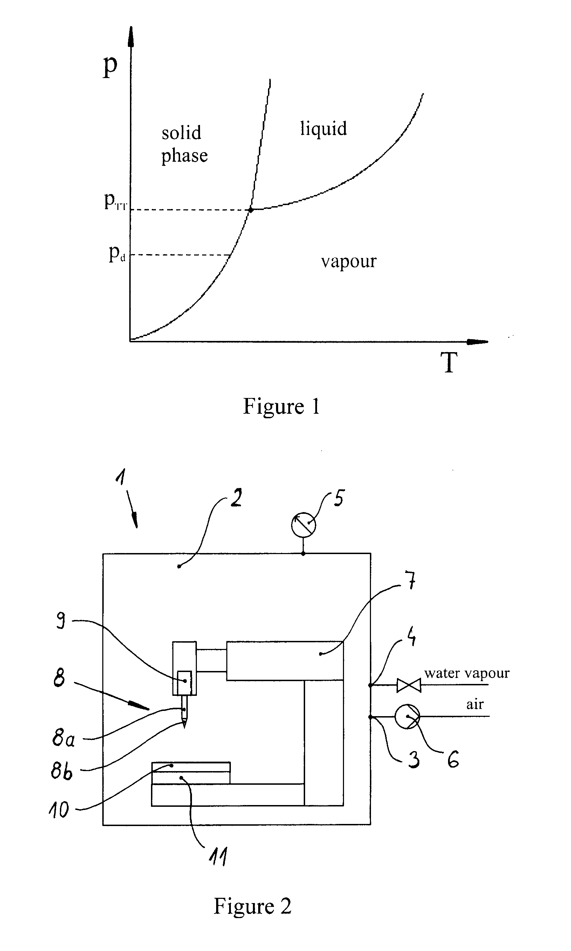

Figure 1: Diagram of the triple point of water
Figure 2: Diagram of the device for gripping, transferring and actively releasing objects

A device 1 for gripping, transferring and actively releasing objects comprises:
- a vacuum chamber 2, preferably of stainless sheet metal in the form of a cylinder, with a connector 3 for a an air suctioning line provided with a vacuum pump 6 that generates a pressure lower than about 610 Pa, with a connector 4 for a water vapour supply line, and with a manometer 5 for measuring pressure within the vacuum chamber,
- a manipulation device 7 with an arm arranged within the vacuum chamber and the repeatability of which is selected in a way to exceed approximately ½ of the diameter of the object, preferably exceeding approximately ⅓ of the diameter of the object to be transferred,
- a one-finger gripper 8 made from a stainless, heat conductive material comprising a shaft 8a connected with one end with the arm of the manipulation device 7, and a tip 8b arranged on the distal end of the shaft 8a and having a surface for a contact with the object to be transferred, the apex diameter being selected in a way to be from about ⅓ to about ½ of the diameter of the object to be transferred,
- at least one cooling/heating body 9, preferably a Peltier element, for cooling/ heating the one-finger gripper 8, wherein the cooling/heating body 9 is arranged within/on the arm of the manipulation device 7 and connected with the one-finger gripper 8 in a way that the top of the tip of the one-finger gripper projects over the edge of the cooling/heating body 9 for less than 500 µm,
- a table 10 supporting the object to be transferred,
- at least one cooling/heating body 11, preferably a Peltier element, for cooling/heating the table, wherein the cooling/heating body is arranged below/within the table,
- a control unit for controlling the manipulation device 7 with the arm; the cooling/heating bodies; water vapour supply; and pressure within the vacuum chamber.

The device of the present invention can further comprise an inspection window on the vacuum chamber and/or a microscope. The microscope can be an environmental scanning electron microscope (ESEM), a scanning tunnelling microscope (STM), an atomic force microscope (AFM) or other type of electron or optical microscope.

The one-finger gripper 8 is formed of stainless, heat conductive material, preferably gold. The shaft 8a of the one-finger gripper is made of a wire having a diameter smaller than 200 µm, preferably smaller than 50 µm. The tip 8b of the one-finger gripper 8 is produced according to any known method of producing tips, such as etching method.

The method for gripping, transferring and actively releasing micro and nano objects by means of the device 1 comprises the following steps:
a) gas suctioning from the vacuum chamber 2 in order to reach a pressure smaller than 1/10 of the operating pressure (p_{d}) within the chamber,
b) supply of water vapour into the vacuum chamber 2 to reach an operating pressure (p_{d}) that is lower than the pressure (p_{TT}) of the triple point of water, i. e. lower than about 610 Pa,
c) bringing the tip 8b of the one-finger gripper 8 to close proximity of the object to be transferred,
d) cooling the tip of the one-finger gripper 8 and cooling the table 10 to a temperature that lies in the diagram of the triple point of water close to the sublimation/deposition line (sometimes also called desublimation) at operating pressure (p_{d}), preferably slightly to the right of said line,
e) cooling the tip 8b of the one-finger gripper to a temperature that lies in the diagram of the triple point of water left from the sublimation/deposition line at operating pressure (p_{d}), wherein water vapour is deposited in an ice layer that at least partly covers the object to be transferred from the top side, and on the tip of the one-finger gripper,
f) transferring the object to a desired position in close proximity of the depositing surface,
g) heating the tip 8b of the one-finger gripper and heating the table to a temperature that lies in the diagram of the triple point of water to the right of the sublimation/deposition line at operating pressure (p_{d}), wherein a layer of ice is sublimated to water vapour,
h) removing the empty tip 8b of the one-finger gripper from the depositing surface.

The method for gripping, transferring and actively releasing micro and nano objects by means of the device of the invention can comprise further steps that increase the efficiency of object transfers:
i) cooling the table 10 to a temperature that lies in the diagram of the triple point of water to the left of the sublimation/deposition line at operating pressure (p_{d}), wherein water vapour deposits in an ice layer that at least partly covers the object to be transferred from the lower side, wherein step i) is performed simultaneously with step e),
j) heating the table 10 to a temperature that lies in the diagram of the triple point of water to the right of the sublimation/deposition line at operating pressure (p_{d}), wherein an ice layer sublimates to water vapour on the lower side of the object and simultaneously the layer of ice rapidly increases on the top side of the object and on the tip 8b of the one-finger gripper, wherein step j) is carried out after step e) and before step f).

Gas suctioning from the vacuum chamber 2 in step a) and water vapour supply to the vacuum chamber 2 in step b) provide the content of water vapour in the vacuum chamber 2 higher than 90 %. A sequence of steps a) and b) can be repeated at least once, with which higher concentration of water vapour in the vacuum chamber 2 is achieved. Higher concentration of water vapour in the vacuum chamber 2 can also be achieved by a partial overlapping of steps a) and b) in a way that step b) is started before step a) is completed. Herewith, a higher content of water vapour in the vacuum chamber 2 is achieved and simultaneously also the content of dust particles is reduced, namely dust particles can have a size exceeding that of the object to be transferred for several times and can present an obstacle during an object transfer.

In general, in comparison with transferring objects of bigger sizes lower operating pressure (p_{d}) within the vacuum chamber is selected when small objects are transferred. At higher operating pressure (p_{d}) a higher amount of ice is deposited on the tip of the one-finger gripper when water vapour is deposited, and this higher amount is needed to transfer objects of bigger sizes.

An embodiment of the method with concrete operating parameters is presented in the continuation. An object to be transferred is a glass ball having a diameter of 15 µm. The vacuum chamber 2 is vacuumized up to a pressure of about 1 Pa, and then water vapour is supplied to the chamber in order to reach a pressure of about 25 Pa. A combination of an oil rotary pump and a turbomolecular pump can be used as a vacuum pump. The tip of the one-finger gripper is brought closer to the object. The temperature of the table and that of the tip of the one-finger gripper are decreased approximately to the temperature of deposition/sublimation at operating pressure, i. e. about -30 °C. The tip of the one-finger gripper is further cooled in a way that it moves to the left of the deposition curve in the phase diagram of water, to a temperature of about -50 °C. Ice starts depositing on the tip and covers the object from the top side. Water vapour deposition causes reduction in the pressure within the vacuum chamber 2. The time needed for a sufficient ice deposition is less than 10 seconds, about 5 seconds, wherein an ice layer of a thickness of several 10 µm is deposited on the tip. The object attaches to the tip and can be moved to a desired location. There, the object can be released by bringing it close to the depositing table, the tip of the one-finger gripper and the table are then heated to a temperature of about -20 °C for the ice to sublimate. Depending on the selected operating parameters the liquid phase may transitionally occur on the tip of the one-finger gripper, but the water rapidly evaporates. After the ice sublimates, the object is separated from the tip of the one-finger gripper and the tip can be removed. Ice sublimation takes less than 5 seconds, about 3 seconds.

## Claims

1. A device (1) for gripping, transferring and actively releasing micro and nano objects comprising:
- a manipulation device (7) with an arm, the repeatability of which is selected in a way to exceed approximately ½ of the diameter of the object, preferably exceeding approxirnately ⅓ of the diameter of the object to be transferred,
- a one-finger gripper (8) made from a stainless, heat conductive material, preferably gold, comprising a shaft (8a) connected with one end with the arm of the manipulation device (7), and a tip (8b) arranged on the distal end of the shaft (8a) and having a surface for a contact with the object to be transferred, the apex diameter being selected in a way to be from about ⅓ to about ½ of the diameter of the object to be transferred,
**characterized in that** it further comprises
- a vacuum chamber (2), preferably of stainless sheet metal in the form of a cylinder, with a connector (3) for an air suctioning line provided with a vacuum pump (6) that generates a pressure lower than about 610 Pa, with a connector (4) for a water vapour supply line, and with a manometer (5) for measuring pressure within the vacuum chamber (2), wherein said manipulation device (7) with the arm with the one-finger gripper (8) is arranged within said vacuum chamber (2),
- at least one cooling/heating body (9), preferably a Peltier element, for cooling/ heating said one-finger gripper (8), wherein the cooling/heating body (9) is arranged within/on the arm of the manipulation device (7) and connected with the one-finger gripper (8),
- a table (10) supporting the object to be transferred,
- at least one cooling/heating body (11), preferably a Peltier element, for cooling/heating said table (10), wherein the cooling/heating body (11) is arranged below/within the table (10), and
- a control unit for controlling the manipulation device (7) with the arm; the cooling/heating bodies (9, 11); water vapour supply; and pressure within the vacuum chamber (2).

2. Device according to claim 1, **characterized in that** the one-finger gripper (8) is arranged in way that the top of the tip (8b) of the one-finger gripper projects over the edge of the cooling/heating body (9) for less than 500 µm.

3. Device according to any of preceding claims, **characterized in that** the shaft (8a) of the one-finger gripper (8) is made of a wire having a diameter smaller than 200 µm, preferably smaller than 50 µm.

4. Device according to any of preceding claims, **characterized in that** it further comprises one or several devices from the group comprising an inspection window on the vacuum chamber an optical microscope and an electron microscope.

5. Method for gripping, transferring and actively rel easing micro and nano objects by means of said device (1) according to any of preceding claims, comprising the steps:
c) bringing the tip (8b) of the one-fmger gripper (8) to close proximity of the object to be transferred,
f) transferring the object to a desired position in close proximity of a depositing surface,
h) removing the empty tip (8b) of the one-finger gripper from the depositing surface, **characterized in that** it further comprising the steps of
a) gas suctioning from the vacuum chamber (2) in order to reach a pressure smaller than 1/10 of the operating pressure (P_{d}) within the chamber,
b) supply of water vapour into the vacuum chamber (2) to reach an operating pressure (P _{d}) that is lower than the pressure (p_{TT}) of the triple point of water, i. e. lower than about 610 Pa, wherein steps a) and b) are carried out before step c),
d) cooling the tip (8b) of the one-finger gripper (8) and cooling the table (10) to a temperature that lies in the diagram of the triple point of water close to the sublimation/deposition line at operating pressure (p_{d}), preferably slightly to the right of said line, wherein step d) is carried out after step c),
e) cooling the tip (8b) of the one-finger gripper to a temperature that lies in the diagram of the triple point of water left from the sublimation/deposition line at operating pressure (p_{d}), wherein water vapour is deposited in an ice layer that at least partly covers the object to be transferred from the top side, and on the tip (8b) of the one-finger gripper, wherein step e) is carried out after step d),
g) heating the tip (8b) of the one-finger gripper and heating the table to a temperature that lies in the diagram of the triple point of water to the right of the sublimation/deposition line at operating pressure (p_{d}), wherein a layer of ice is sublimated to water vapour, wherein step g) is performed before step h) and after step f).

6. Method according to the preceding claim, **characterized in that** it further comprises the steps of
i) cooling the table (10) to a temperature that lies in the diagram of the triple point of water to the left of the sublimation/deposition line at operating pressure (p_{d}), wherein water vapour deposits in an ice layer that at least partly covers the object to be transferred from the lower side, wherein step i) is performed simultaneously with step e),
j) heating the table (10) to a temperature that lies in the diagram of the triple point of water to the right of the sublimation/deposition line at operating pressure (p_{d}), wherein an ice layer sublimates to water vapour on the lower side of the object and simultaneously the layer of ice rapidly increases on the top side of the object and on the tip (8b) of the one-finger gripper, wherein step j) is carried out after step e) and before step f).

7. Method according to claim 5 or 6 **characterized in that** the sequence of steps a) and b) is repeated at least once.

8. Method according to claim 5 or 6 **characterized in that** steps a) and b) at least partly overlap in a way that step b) is started before step a) is completed.

## Patentansprüche

1. Vorrichtung (1) zum Greifen, Übertragen und aktiven Loslassen von Mikro- und Nanoobjekten, die Folgendes umfasst:
- eine Betätigungsvorrichtung (7) mit einem Arm, dessen Wiederholgenauigkeit in einer Weise ausgewählt ist, dass sie etwa 1/2 des Durchmessers des Objekts übersteigt, vorzugsweise etwa 1/3 des Durchmessers des zu übertragenden Objekts übersteigt,
- einen Ein-Finger-Greifer (8), der aus einem rostfreien, wärmeleitfähigen Material, vorzugsweise Gold, hergestellt ist und der eine Welle (8a), die mit einem Ende mit dem Arm der Betätigungsvorrichtung (7) verbunden ist, und eine Spitze (8b), die an dem distalen Ende der Welle (8a) angeordnet ist und eine Oberfläche für den Kontakt mit dem zu übertragenden Objekt aufweist, umfasst, wobei der Durchmesser der Spitze in einer Weise ausgewählt ist, dass er etwa 1/3 bis etwa 1/2 des Durchmessers des zu übertragenden Objekts beträgt,
**dadurch gekennzeichnet, dass** sie ferner Folgendes umfasst:
- eine Vakuumkammer (2), vorzugsweise aus einem rostfreien Blech in der Form eines Zylinders, mit einem Verbinder (3) für eine Luftansaugleitung, die mit einer Vakuumpumpe (6) versehen ist, die einen Druck erzeugt, der tiefer als etwa 610 Pa ist, mit einem Verbinder (4) für eine Wasserdampf-Versorgungsleitung und mit einem Manometer (5) zum Messen des Drucks innerhalb der Vakuumkammer (2), wobei die Betätigungsvorrichtung (7) mit dem Arm mit dem Ein-Finger-Greifer (8) innerhalb der Vakuumkammer (2) angeordnet ist,
- wenigstens einen Kühl-/Heizkörper (9), vorzugsweise ein Peltier-Element, zum Kühlen/Erwärmen des Ein-Finger-Greifers (8), wobei der Kühl-/Heizkörper (9) innerhalb des Arms/an dem Arm der Betätigungsvorrichtung (7) angeordnet und mit dem Ein-Finger-Greifer (8) verbunden ist,
- einen Tisch (10), der das zu übertragende Objekt stützt,
- wenigstens einen Kühl-/Heizkörper (11), vorzugsweise ein Peltier-Element, zum Kühlen/Erwärmen des Tisches (10), wobei der Kühl-/Heizkörper (11) unter dem Tisch/innerhalb des Tisches (10) angeordnet ist, und
- eine Steuereinheit zum Steuern der Betätigungsvorrichtung (7) mit dem Arm; der Kühl-/Heizkörper (9, 11); der Wasserdampfversorgung; und des Drucks innerhalb der Vakuumkammer (2).

2. Vorrichtung nach Anspruch 1, **dadurch gekennzeichnet, dass** der Ein-Finger-Greifer (8) in einer Weise angeordnet ist, dass das Oberteil der Spitze (8b) des Ein-Finger-Greifers für weniger als 500 µm über den Rand des Kühl-/Heizkörpers (9) vorsteht.

3. Vorrichtung nach einem der vorhergehenden Ansprüche, **dadurch gekennzeichnet, dass** die Welle (8a) des Ein-Finger-Greifers (8) aus einem Draht hergestellt ist, der einen Durchmesser aufweist, der kleiner als 200 µm, vorzugsweise kleiner als 50 µm ist.

4. Vorrichtung nach einem der vorhergehenden Ansprüche, **dadurch gekennzeichnet, dass** sie ferner eine oder mehrere Vorrichtungen aus der Gruppe umfasst, die ein Kontrollfenster in der Vakuumkammer, ein optisches Mikroskop und ein Elektronenmikroskop umfasst.

5. Verfahren zum Ergreifen, Übertragen und aktiven Loslassen von Mikro- und Nanoobjekten mittels der Vorrichtung (1) nach einem der vorhergehenden Ansprüche, das die folgenden Schritte umfasst:
c) Bringen der Spitze (8b) des Ein-Finger-Greifers (8) in nächste Nähe des zu übertragenden Objekts,
f) Übertragen des Objekts in eine Sollposition in nächster Nähe einer Ablagefläche,
h) Entfernen der leeren Spitze (8b) des Ein-Finger-Greifers von der Ablagefläche, **dadurch gekennzeichnet, dass** es ferner die folgenden Schritte umfasst
a) Gasansaugen von der Vakuumkammer (2), um einen Druck zu erreichen, der kleiner als 1/10 des Arbeitsdrucks (pd) innerhalb der Kammer ist,
b) Zufuhr von Wasserdampf in die Vakuumkammer (2), um einen Arbeitsdruck (Pd) zu erreichen, der tiefer als der Druck (p_{TT}) des Tripelpunkts des Wassers ist, d. h., tiefer als etwa 610 Pa, wobei die Schritte a) und b) vor dem Schritt c) ausgeführt werden,
d) Kühlen der Spitze (8b) des Ein-Finger-Greifers (8) und Kühlen des Tisches (10) auf eine Temperatur, die in der graphischen Darstellung des Tripelpunkts des Wassers nahe an der Sublimations-/Resublimationslinie beim Arbeitsdruck (p_{d}), vorzugsweise etwas rechts von der Linie liegt, wobei der Schritt d) nach dem Schritt c) ausgeführt wird,
e) Kühlen der Spitze (8b) des Ein-Finger-Greifers auf eine Temperatur, die in der graphischen Darstellung des Tripelpunkts des Wassers links von der Sublimations-/Resublimationslinie beim Arbeitsdruck (p_{d}) liegt, wobei der Wasserdampf in eine Eisschicht, die das zu übertragende Objekt wenigstens teilweise von der Oberseite abdeckt, und auf der Spitze (8b) des Ein-Finger-Greifers resublimiert wird, wobei der Schritt e) nach dem Schritt d) ausgeführt wird,
g) Erwärmen der Spitze (8b) des Ein-Finger-Greifers und Erwärmen des Tisches auf eine Temperatur, die in der graphischen Darstellung des Tripelpunkts des Wassers rechts von der Sublimations-/Resublimationslinie beim Arbeitsdruck (pd) liegt, wobei eine Eisschicht in Wasserdampf sublimiert wird, wobei der Schritt g) vor dem Schritt h) und nach dem Schritt f) ausgeführt wird.

6. Verfahren nach dem vorhergehenden Anspruch, **dadurch gekennzeichnet, dass** es ferner die folgenden Schritte umfasst
i) Kühlen des Tisches (10) auf eine Temperatur, die in der graphischen Darstellung des Tripelpunkts des Wassers links von der Sublimations-/Resublimationslinie beim Arbeitsdruck (p_{d}) liegt, wobei der Wasserdampf in einer Eisschicht resublimiert, die das zu übertragende Objekt wenigstens teilweise von der Unterseite abdeckt, wobei der Schritt i) gleichzeitig mit dem Schritt e) ausgeführt wird,
j) Erwärmen des Tisches (10) auf eine Temperatur, die in der graphischen Darstellung des Tripelpunkts des Wassers rechts von der Sublimations-/Resublimationslinie beim Arbeitsdruck (p_{d}) liegt, wobei eine Eisschicht zu Wasserdampf auf der Unterseite des Objekts sublimiert und die Eisschicht auf der Oberseite des Objekts und auf der Spitze (8b) des Ein-Finger-Greifers gleichzeitig schnell zunimmt, wobei der Schritt j) nach dem Schritt e) und vor dem Schritt f) ausgeführt wird.

7. Verfahren nach Anspruch 5 oder 6, **dadurch gekennzeichnet, dass** der Ablauf der Schritte a) und b) wenigstens einmal wiederholt wird.

8. Verfahren nach Anspruch 5 oder 6, **dadurch gekennzeichnet, dass** sich die Schritte a) und b) wenigstens teilweise in einer Weise überlappen, dass der Schritt b) begonnen wird, bevor der Schritt a) abgeschlossen ist.

## Revendications

1. Dispositif (1) destiné à saisir, transférer et libérer activement des micro- et nano-objets, comportant :
- un dispositif (7) de manipulation doté d'un bras, dont la répétabilité est choisie de façon à dépasser approximativement 1/2 du diamètre de l'objet, de préférence à dépasser approximativement 1/3 du diamètre de l'objet à transférer,
- un préhenseur (8) à un doigt constitué d'un matériau inoxydable conducteur de la chaleur, de préférence de l'or, comportant un arbre (8a) relié par une extrémité au bras du dispositif (7) de manipulation, et un embout (8b) disposé sur l'extrémité distale de l'arbre (8a) et présentant une surface destinée à un contact avec l'objet à transférer, le diamètre du sommet étant choisi de façon à être compris entre environ 1/3 et environ 1/2 du diamètre de l'objet à transférer,
**caractérisé en ce qu'**il comporte en outre
- une chambre (2) à vide, de préférence en métal inoxydable en feuille sous la forme d'un cylindre, dotée d'un raccord (3) destiné à une canalisation d'aspiration d'air munie d'une pompe (6) à vide qui génère une pression inférieure à environ 610 Pa, dotée d'un raccord (4) destiné à une canalisation d'alimentation en vapeur d'eau, et dotée d'un manomètre (5) servant à mesurer la pression à l'intérieur de la chambre (2) à vide, ledit dispositif (7) de manipulation doté du bras muni du préhenseur (8) à un doigt étant disposé à l'intérieur de ladite chambre (2) à vide,
- au moins un corps (9) de refroidissement/chauffage, de préférence un élément à effet Peltier, servant à refroidir/chauffer ledit préhenseur (8) à un doigt, le corps (9) de refroidissement/chauffage étant disposé à l'intérieur de/sur le bras du dispositif (7) de manipulation et relié au préhenseur (8) à un doigt,
- une table (10) soutenant l'objet à transférer,
- au moins un corps (11) de refroidissement/chauffage, de préférence un élément à effet Peltier, servant à refroidir/chauffer ladite table (10), le corps (11) de refroidissement/chauffage étant disposé au-dessous/à l'intérieur de la table (10), et
- une unité de commande servant à commander le dispositif (7) de manipulation doté du bras ; les corps (9, 11) de refroidissement/chauffage ; l'alimentation en vapeur d'eau ; et la pression à l'intérieur de la chambre (2) à vide.

2. Dispositif selon la revendication 1, **caractérisé en ce que** le préhenseur (8) à un doigt est disposé de telle façon que le sommet de l'embout (8b) du préhenseur à un doigt dépasse par-dessus le bord du corps (9) de refroidissement/chauffage sur moins de 500 µm.

3. Dispositif selon l'une quelconque des revendications précédentes, **caractérisé en ce que** l'arbre (8a) du préhenseur (8) à un doigt est constitué d'un fil présentant un diamètre inférieur à 200 µm, de préférence inférieur à 50 µm.

4. Dispositif selon l'une quelconque des revendications précédentes, **caractérisé en ce qu'**il comporte en outre un ou plusieurs dispositifs issus du groupe comprenant une fenêtre d'inspection sur la chambre à vide, un microscope optique et un microscope électronique.

5. Procédé pour saisir, transférer et libérer activement des micro- et nano-objets au moyen dudit dispositif (1) selon l'une quelconque des revendications précédentes, comportant les étapes consistant à :
c) amener l'embout (8b) du préhenseur (8) à un doigt à proximité immédiate de l'objet à transférer,
f) transférer l'objet à une position souhaitée à proximité immédiate d'une surface de dépôt,
h) retirer l'embout (8b) vide du préhenseur à un doigt de la surface de dépôt, **caractérisé en ce qu'**il comporte en outre les étapes consistant à
a) aspirer un gaz à partir de la chambre (2) à vide afin d'atteindre une pression inférieure à 1/10 de la pression (p_{d}) de fonctionnement à l'intérieur de la chambre,
b) amener de la vapeur d'eau dans la chambre (2) à vide pour atteindre une pression (p_{d}) de fonctionnement qui est inférieure à la pression (p_{TT}) du point triple de l'eau, c.-à-d. inférieure à environ 610 Pa, les étapes a) et b) étant réalisées avant l'étape c),
d) refroidir l'embout (8b) du préhenseur (8) à un doigt et refroidir la table (10) jusqu'à une température qui se situe sur le diagramme du point triple de l'eau près de la ligne sublimation/déposition à la pression (p_{d}) de fonctionnement, de préférence légèrement à droite de ladite ligne, l'étape d) étant réalisée après l'étape c),
e) refroidir l'embout (8b) du préhenseur à un doigt jusqu'à une température qui se situe sur le diagramme du point triple de l'eau à gauche de la ligne sublimation/déposition à la pression (p_{d}) de fonctionnement, de la vapeur d'eau étant déposée en une couche de glace qui recouvre au moins partiellement l'objet à transférer par la face supérieure, et sur l'embout (8b) du préhenseur à un doigt, l'étape e) étant réalisée après l'étape d),
g) chauffer l'embout (8b) du préhenseur à un doigt et chauffer la table jusqu'à une température qui se situe sur le diagramme du point triple de l'eau à droite de la ligne sublimation/déposition à la pression (p_{d}) de fonctionnement, une couche de glace étant sublimée en vapeur d'eau, l'étape g) étant effectuée avant l'étape
h) et après l'étape f).

6. Procédé selon la revendication précédente, **caractérisé en ce qu'**il comporte en outre les étapes consistant à
i) refroidir la table (10) jusqu'à une température qui se situe sur le diagramme du point triple de l'eau à gauche de la ligne sublimation/déposition à la pression (p_{d}) de fonctionnement, de la vapeur d'eau se déposant en une couche de glace qui recouvre au moins partiellement l'objet à transférer par la face inférieure, l'étape i) étant effectuée simultanément à l'étape e),
j) chauffer la table (10) jusqu'à une température qui se situe sur le diagramme du point triple de l'eau à droite de la ligne sublimation/déposition à la pression (p_{d}) de fonctionnement, une couche de glace se sublimant en vapeur d'eau sur la face inférieure de l'objet et, simultanément, la couche de glace augmentant rapidement sur la face supérieure de l'objet et sur l'embout (8b) du préhenseur à un doigt, l'étape j) étant réalisée après l'étape e) et avant l'étape f).

7. Procédé selon la revendication 5 ou 6 **caractérisé en ce que** la séquence des étapes a) et b) est répétée au moins une fois.

8. Procédé selon la revendication 5 ou 6 **caractérisé en ce que** les étapes a) et b) se chevauchent au moins partiellement de telle façon que l'étape b) soit entamée avant que l'étape a) soit achevée.
